# EUROPEAN PATENT SPECIFICATION

(11) **EP 1 869 523 B1**
(45) Date of publication and mention of the grant of the patent: **26.02.2014**
(21) Application number: 06716494.7
(22) Date of filing: 22.03.2006
(51) Int. Cl.: G02F 1/1335

(54) **LIQUID CRYSTAL DISPLAY DEVICE AND MOBILE STATION HAVING THE SAME**
FLÜSSIGKRISTALLANZEIGEVORRICHTUNG UND MOBILE STATION DAMIT
DISPOSITIF D'AFFICHAGE A CRISTAUX LIQUIDES ET STATION MOBILE INCORPORANT LEDIT DISPOSITIF

(30) Priority: 12.04.2005 KR 20050030449
(43) Date of publication of application: 26.12.2007
(73) Proprietor: LG Display Co., Ltd., Youngdungpo-gu, Seoul (KR)
(72) Inventor: HWANG, Hyun Ha, Seoul 135-090 (KR); KANG, Seung Gon, Gyeonggi-do 445-160 (KR)
(74) Representative: Hirsch & Associés
(86) International application number: PCT/KR2006/001045
(87) International publication number: WO 2006/109931

(56) References cited:
- WO-A1-02/101447
- WO-A1-2004/068201
- KR-A- 2001 081 675
- KR-A- 2004 101 679
- KR-A- 2004 104 028
- US-A1- 2004 070 711
- US-B1- 6 565 224

## Description

### Technical Field

The present invention relates to a liquid crystal display device (LCD), and more particularly, to an LCD capable of bidirectionally displaying an image in front and rear directions using a transreflective liquid crystal panel and a mobile station having the same.

### Background Art

Among image display devices, a cathode ray tube (CRT) display device has been most widely used up to now. However, the CRT display device is very disadvantageous because it has large volume and weight compared to its display area.

Therefore, the CRT display device is gradually replaced by a thin film type flat panel display device (FPD) that can be used in any place because it has a small thickness while having a large display area.

An example of the FPD is a liquid crystal display device (LCD). The LCD operates using the optical anisotropy and polarization of liquid crystal. The LCD has a thin and long structure and its molecules have the characteristics of directionality and polarizability. Thus, the molecular arrangement direction of liquid crystal can be adjusted by applying an artificial electric field to the liquid crystal molecules. In the LCD, by adjustment of the liquid crystal alignment direction, a liquid crystal panel transmits or reflects light by the optical anisotropy of the liquid crystal according to the arrangement direction of liquid crystal molecules, thereby displaying images and colors.

Recently, various researches are conducted on a dual display that can bidirectionally display an image in front and rear directions.

US 6,565,224 patent discloses an object comprising a light pipe and a surface light source unit that can be adapted for a front-lighting system and used for forming a reflection type liquid-crystal display device.

This patent describes a liquid crystal device comprising a reflective crystal panel and a front light unit supplying light to reflective liquid crystal panel. It also describes a diffuser and a polarizer between the front light unit and the liquid crystal display panel and discloses the features of the preamble of claim 1.

An inconvenient of the solution described in this patent is that the reflective liquid crystal panel doesn't have transmissive properties. In consequence, this solution cannot provide a double-sided display.

US 2004/0070711 patent discloses a double-sided LCD panel comprising a transflective LCD panel and a light-emitting device. One surface of the transflective panel is used in the transparent mode, and the other surface is used in the reflective mode, achieving the goal of double-sided display.

An inconvenient of the solution described in this patent is that the reflection of light received from the outside caused a light pollution inside the LCD panel.

### [Disclosure]

### [Technical Problem]

The present invention provides an LCD that can bidirectionally display an image in front and rear directions using a transreflective liquid crystal panel.

The present invention also provides a slim mobile station that can bidirectionally display an image using an LCD having a transreflective liquid crystal panel.

### [Technical Solution]

The present invention provides a liquid crystal display device according to claim 1. Preferred developments are defined in the dependent claims.

### Advantageous Effects

According to the present invention, it is possible to provide an LCD that bidirectionally displays an image in front and rear directions using a transreflective liquid crystal panel.

Also, it is possible to provide a slim mobile station that bidirectionally display an image using an LCD having a transreflective liquid crystal panel.

### Brief Description of the Drawings

Fig. 1 schematically illustrates the structure of an LCD according to the present invention.
Fig. 2 illustrates that an image is displayed using light provided from a front light unit in the LCD according to the present invention.
Fig. 3 illustrates that an image is displayed using an external light source in the LCD according to the present invention.
Fig. 4 illustrates an LCD according to an embodiment of the present invention.
Fig. 5 illustrates an LCD according to another embodiment of the present invention.
Fig. 6 illustrates the shape of a moth-eye type embossing polarizer used in the LCD according to the present invention.
Fig. 7 is a graph comparing the characteristics of the moth-eye type embossing polarizer used in the LCD according to the present invention with the characteristics of a general polalizer.
Fig. 8 is a graph illustrating the characteristics of the moth-eye type embossing polarizer used in the LCD according to the present invention.

### Mode for the Invention

Reference will now be made in detail to the preferred embodiments of the present invention, examples of which are illustrated in the accompanying drawings.

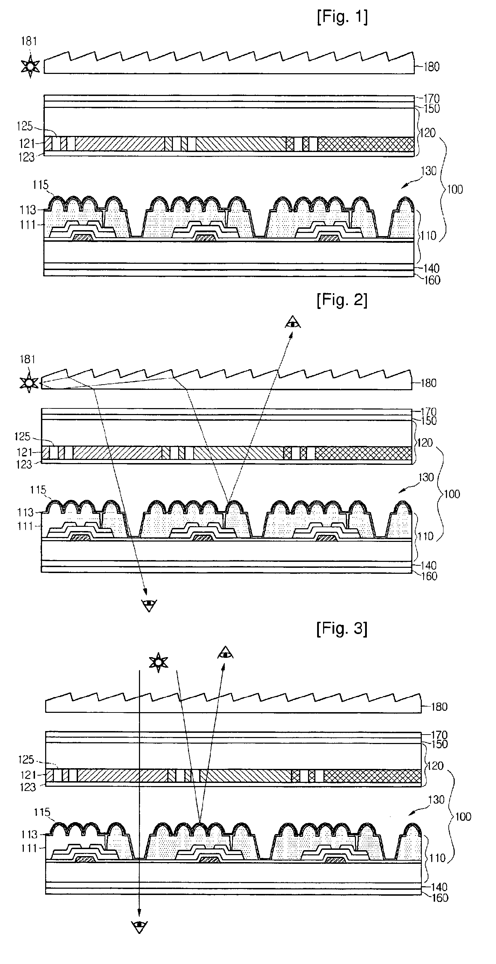

Fig. 1 schematically illustrates the structure of an LCD according to the present invention.

Referring to Fig. 1, an LCD according to the present invention includes: a transreflective liquid crystal panel 100; a front light unit 180 supplying light for image display to the transreflective liquid crystal panel 100; and a second polarizer 170 disposed on the transreflective liquid crystal panel 100. Fine protrusions are formed on an upper surface of the second polarizer 170.

The fine protrusions of the second polarizer 170 are formed in a moth-eye structure, which will be described in detail later.

In the LCD according to the present invention, the front light unit 180 is disposed at a front side of the transreflective liquid crystal panel 100 and thus an image can be bidirectionally displayed in front and rear directions of the transreflective liquid crystal panel 100. A reference numeral 181 denotes a light source provided at the front light unit 180.

That is, the LCD provides a first display mode in which light reflected by a reflective electrode 115 of the transreflective liquid crystal panel 100 is used to display an image at the front side of the transreflective liquid crystal panel 100. Also, the LCD provides a second display mode in which light transmitted through a transmissive electrode 113 of the transreflective liquid crystal panel 100 is used to display an image at a rear side of the transreflective liquid crystal panel 100.

A second retardation compensation film 150 is disposed on the transreflective liquid crystal panel 100, and a first retardation compensation film 140 and a first polarizer 160 are disposed under the transreflective liquid crystal panel 100.

The transreflective liquid crystal panel 100 includes a first substrate 110, a second substrate 120, and a liquid crystal layer 130, which are well known to those skilled in the art.

The first substrate 110 includes: an array device having a thin film transistor; the transmissive electrode 113 formed on the array device and transmitting incident light to display an image; and the reflective electrode 115 formed at a portion of an upper surface of the transmissive electrode 113 and reflecting incident light to display an image. A convex-concave layer 111 for forming protrusions is formed in a lower region of the reflective electrode 115. The convex-concave layer 111 may be formed of organic material or inorganic maternal.

A case where the reflective electrode 115 is formed on the transmissible electrode 113 is illustrated as an example. However, the transmissive electrode 113 and the reflective electrode 115 are alternately formed on the array device. The transmissive electrode 113 and the reflective electrode 115 may be arranged and formed in various methods. These methods are not an important matter of interest in the present invention and thus their descriptions will be omitted for conciseness.

The array device includes: a plurality of gate lines formed in a first direction, a plurality of data lines formed perpendicular to the gate lines; pixel regions defined by the gate and data lines; and thin film transistors formed at intersections of the gate and data lines.

The second substrate 120 is disposed facing the first substrate 110. The second substrate 120 includes: a color filter 121 formed at a position corresponding to the transmissive electrode 113; and a common electrode 123 formed on a lower surface of the color filter 121. Light holes 125 may be formed at the color filter 121. When the light holes 125 are formed at the color filter 121, light transmittance can be increased to enhance the entire brightness.

The liquid crystal layer 130 is filled between the first and second substrates 110 and 120. The transreflective liquid crystal panel 100 may be configured in an electrically-controlled birefringence (ECB) mode. For example, the transreflective liquid crystal panel 100 may be configured in a dual cell gap ECB mode such that it has a twist angle of 0° and a birefringence value (Δn*d) of 0.20-0.40 µm for a transmissive mode. The dual cell gap means a case where a reflective region is formed to have 1/2 times the cell gap of a transmissive region.

Alternatively, the transreflective liquid crystal panel 100 may be configured in a vertical alignment (VA) mode. For example, the transreflective liquid crystal panel 100 may be configured in a VA mode such that it has a twist angle of 0° and a birefringence value (Δn*d) of 0.20-0.40 µm for a transmission mode. The VA mode may be a dual cell gap VA mode where a reflective region is formed to have 1/2 times the cell gap of a transmissive region.

The first retardation compensation film 140 and the first polarizer 160 are formed on a lower surface of the first substrate 110, and the second retardation compensation film 150 and the second polarizer 170 are formed on an upper surface of the second substrate 120.

The first and second retardation compensation films 140 and 150 may be formed using a wideband phase retardation plate. At this time, the wideband phase plate may be configured to perform a function of changing linearly-polarized light having passed through the polarizer into circularly-polarized light. This can be implemented in such a way that the wideband phase retardation plate is configured to generate a phase retardation of λ/4 with respect to an incident wave.

As an example, the wideband phase retardation plate may be configured to include a λ/2 plate (HWP) and a λ/4 plate (QWP). In this structure of two-sheet phase difference film, the film is generally formed of Arton from JSR or S-Cina from Sekisui. Alternatively, a one-sheet phase difference film may be used to form the wideband phase retardation plate generating a phase retardation of λ/4. The wideband phase retardation plate may be formed of one wide retardation film (WRF) using a reciprocal dispersion film from Sanritz.

An operation in which an image is displayed in the above LCD will now be described in detail with reference to Figs. 2 and 3. Fig. 2 illustrates that an image is displayed using light provided from a front light unit in the LCD. Fig. 3 illustrates that an image is displayed using an external light source in the LCD.

At first, referring to Fig. 2, what an image is displayed using light provided from a front light unit will be explained.

Referring to Fig. 2, light provided from the light source 181 of the front light unit 180 is used to bidirectionally display an image at the front and rear sides of the transreflective liquid crystal panel 100.

The front light unit 180 has the light source 181 at the side thereof. The light source 181 may be configured with an LED. The LED may be configured with a white LED, or red/green/blue LEDs. Alternatively, the light source 181 may be configured with a cold cathode fluorescent lamp (CCFL).

That is, the LCD provides a first display mode in which light reflected by a reflective electrode 115 of the transreflective liquid crystal panel 100 is used to display an image at the front side of the transreflective liquid crystal panel 100. Also, the LCD provides a second display mode in which light transmitted through a transmissive electrode 113 of the transreflective liquid crystal panel 100 is used to display an image at a rear side of the transreflective liquid crystal panel 100.

Referring to Fig. 3, light provided from an external light source (e.g., the sun and a peripheral illuminator) is used to bidirectionally display an image at the front and rear sides of the transreflective liquid crystal panel 100. That is, when the front light unit 180 is in an off state, light received from the external light source is used to bidirectionally display an image at the front and rear sides of the transreflective liquid crystal panel 100.

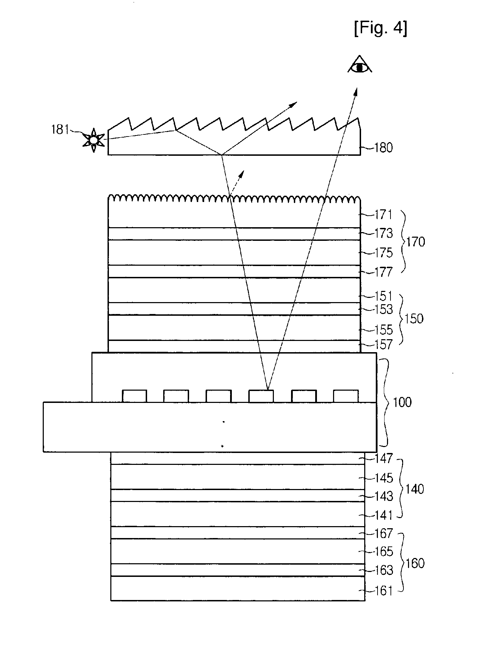

Fig. 4 illustrates an LCD according to an embodiment of the present invention.

Referring to Fig. 4, the LCD according to the embodiment of the present invention includes: a transreflective liquid crystal panel 100; a first retardation compensation film 140; a second retardation compensation film 150; a first polalizer 160; a second polarizer 170; and a front light unit 180 having a light source 181.

The first retardation compensation film 140 includes a first retardation film 141, a second retardation film 145, and adhesives 143 and 147. The second retardation compensation film 150 includes a third retardation film 151, a fourth retardation film 155, and adhesive 153 and 157. The first and third retardation films 141 and 151 may be configured to generate a phase retardation of λ/2. The second and fourth retardation films 145 and 155 may be configured to generate a phase retardation of λ/4.

The first polarizer 160 includes transparent support 161 and 165, a polarization film 163, and an adhesive 167. The second polarizer 170 includes an embossing transparent support 171, a transparent support 175, a polarization film 173, and an adhesive 177. The transparent supports 161, 165 and 175 and the embossing transparent support 171 may be formed of tri-acetate cellulose (TAC). The polarization films 163 and 173 may be formed of poly-vinyl alcohol (PVA).

Fine protrusions are formed on an upper surface of the embossing transparent support 171. The fine protrusions are formed in a moth-eye structure as defined later.

In the above LCD, light (indicated by a dotted line) reflected upward by the embossing transparent support 171 can be blocked to enhance the quality of a displayed image.

Also, the second polarizer 170 is configured to have haze characteristics. Accordingly, it is possible to prevent the occurrence of moire and bright lines that may be caused by light interference between a prism pattern of a light guide plate of the front light unit 180 and a periodic pixel pattern of the transreflective liquid crystal panel 100. At this time, the second polarizer 170 is configured to have a haze value of less than 30%. This can be implemented using a diffusion adhesive or an embedded diffuser of the transparent support.

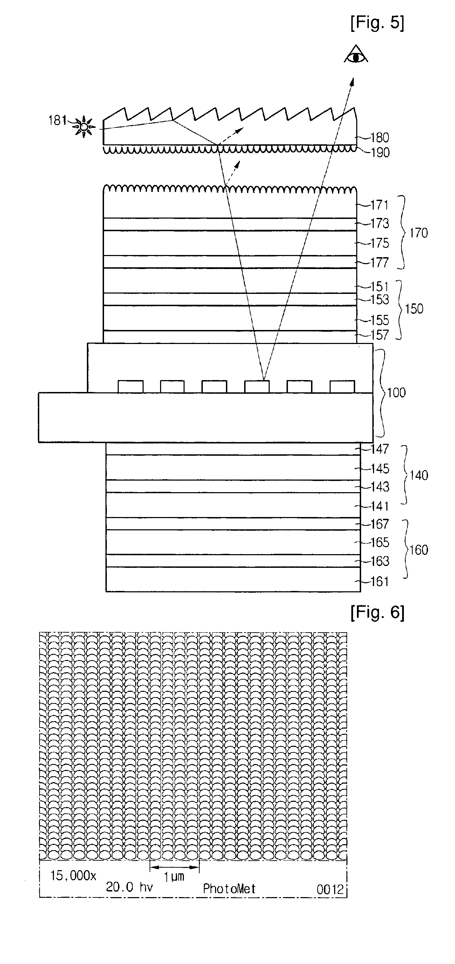

Fig. 5 illustrates an LCD according to another embodiment of the present invention.

Referring to Fig. 5, unlike the embodiment of Fig. 4, the LCD according to another embodiment of the present invention further includes a fine protrusion portion 190 formed on a lower surface of the front light unit 180. The fine protrusion portion 190 may be formed in a moth-eye structure.

In this LCD, light (indicated by a dotted line) reflected upward by the embossing transparent support 171 can be blocked. Also, light (indicated by a dotted line) reflected upward at an interface between the front light unit 180 and the fine protrusion portion 190 can be blocked to further enhance the quality of a displayed image.

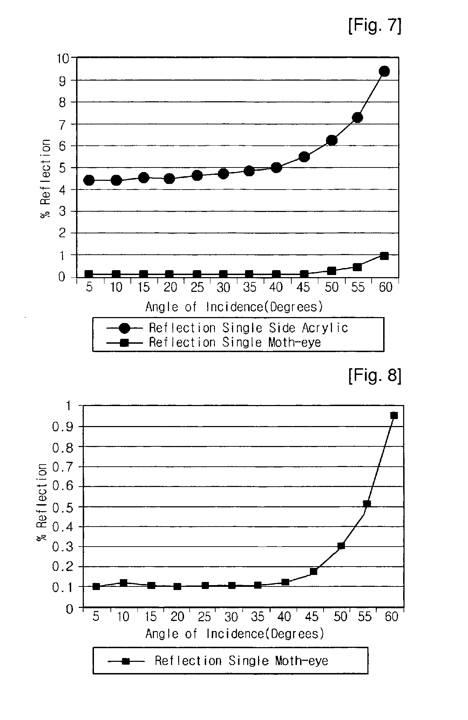

The characteristics of the moth-eye type embossing polarizer of the present invention will now be described in detail with reference to Figs. 6 through 8. Fig. 6 illustrates the shape of a moth-eye type embossing polarizer used in the LCD according to the present invention. Fig. 7 is a graph comparing the characteristics of the moth-eye type embossing polarizer used in the LCD according to the present invention with the characteristics of a general polarizer. Fig. 8 is a graph illustrating the characteristics of the moth-eye type embossing polarizer used in the LCD according to the present invention.

In the present invention, an uniform protrusion array with a moth-eye structure illustrated in Fig. 6 is formed to reduce the reflection of light received from the outside. This reflection prevention surface with the moth-eye structure is formed to have a height of about 200 nm and a protrusion pitch of about 250 nm (with smaller than wavelength of light).

This moth-eye structure may be formed by holographic lithography using a photoresist. In detail, after a moth-eye master is manufactured, the moth-eye structure can be inexpensively manufactured by performing replication using a stamping method.

The embossing polarizer with the moth-eye surface structure operates according to the following principle. That is, the interface of the polarizer is formed to have a re-fractivity changing gradually, not abruptly, thereby minimizing the reflection of incident light.

The graph of Fig. 7 illustrates the difference between a light reflectance depending on an incident angle between a general acryl surface and a moth-eye type surface. Fig. 8 is an enlarged view of the light reflectance at the moth-eye type surface.

As can be seen from Figs. 7 and 8, the embossing polarizer has little surface reflectance of 0.1 % depending on an incident angle, whereas a polarizer with an acryl surface has high surface reflectance of 4.5∼9.5% depending on an incident angle.

Accordingly, when the moth-eye type embossing polarizer is used, the surface reflection at the polarizer surface can be almost removed to enhance the light transmittance and contrast.

Meanwhile, the above mentioned LCD can be used as a dual display device. Accordingly, when the LCD according to the present invention is used in a mobile station (e.g., mobile communication terminals, and PDAs), since an image can be bidirectionally displayed in the front and rear directions of the liquid crystal panel, it is possible to implement a mobile station that can perform various image display functions. This mobile station includes: a communication unit performing communication with external devices; and a controller controlling the communication unit and the image display of the LCD.

For example, when the LCD according to the present invention is applied to a mobile station with a digital camera function, a picture image of the same size and resolution can be simultaneously viewed by several users in the front and rear directions of the mobile station.

### Industrial Applicability

By the LCD according to the present invention, it is possible to bidirectionally display an image in front and rear directions using a transreflective liquid crystal panel.

Also, since the embossing polarizer and the embossing front light unit is used in the LCD, the surface reflection at the respective interfaces can be minimized to the light transmittance. Accordingly, the brightness and the contrast in the reflection mode can be enhanced.

Also, since the polarizer with the haze characteristics is used in the LCD, it is possible to reduce the phenomenon of moire and bright lines that is generated by light interference between the liquid crystal panel and the front light unit.

Also, it is possible to provide the slim mobile station that bidirectionally display an image using LCD having a liquid crystal panel. For example, the present invention makes it possible to manufacture a liquid crystal display module for two-direction image display, which has a thickness of less than 3.5 mm.

## Claims

1. A liquid crystal display device comprising:
a transreflective liquid crystal panel (100);
a front light unit (180) supplying light to the transreflective liquid crystal panel; and
a polarizer (170) disposed on the transreflective liquid crystal panel, **characterized in that** the polarizer (170) has a first surface, facing the front light unit (180), where protrusions are formed in a moth-eye structure, the moth eye structure having a protrusion pitch smaller than the wavelength of light.

2. The liquid crystal display device according to claim 1, wherein the liquid crystal display device provides: a first display mode in which light reflected at a reflective region of the transreflective liquid crystal panel is used to display an image at a first side of the transreflective liquid crystal panel (100); and a second display mode in which light transmitted through a transmissive region of the transreflective liquid crystal panel (100) is used to display an image at a second side of the transreflective liquid crystal panel (100).

3. The liquid crystal display device according to claim 1, wherein the front light unit (180) has a light source (181) at the side thereof.

4. The liquid crystal display device according to claim 3, wherein the light source (181) is one of an LED and a CCFL.

5. The liquid crystal display device according to claim 1, wherein the transreflective liquid crystal panel (100) comprises:
a first substrate (110) including an array device having a thin film transistor, a transmissive electrode (113) transmitting incident light to display an image, and a reflective electrode (115) reflecting incident light to display an image;
a second substrate (120) disposed at a position corresponding to the first substrate (110) and having a color filter formed at a position corresponding to the transmissive electrode (113) of the first substrate (110); and
a liquid crystal layer filled between the first substrate (110) and the second substrate (120).

6. The liquid crystal display device according to claim 5, wherein the second substrate (120) includes a common electrode formed on a first surface of the color filter.

7. The liquid crystal display device according to claim 1, wherein the transreflective liquid crystal panel (100) comprises:
a first substrate (110) including an array device performing a switching function, a convex-concave layer (111) formed of an organic or inorganic material, a transmissive electrode (113) formed on the convex-concave layer and having a bent portion, and a reflective electrode (115) formed on the convex-concave layer (111) and having a bent portion;
a second substrate (120) disposed at a position corresponding to the first substrate (110) and having a color filter formed at a position corresponding to the transmissive electrode (113) of the first substrate (110); and
a liquid crystal layer filled between the first substrate (110) and the second substrate (120).

8. The liquid crystal display device according to claim 7, wherein the second substrate (120) includes a common electrode formed on the first surface of the color filter.

9. The liquid crystal display device according to claim 1, further comprising at least one phase retardation plate formed on both sides of the transreflective liquid crystal panel (100).

10. The liquid crystal display device according to claim 9, wherein the phase retardation plate changes linearly-polarized light having passed through the polarizer (170) into circularly-polarized light.

11. The liquid crystal display device according to claim 9, wherein the phase retardation plate generates a phase retardation of λ/4 with respect to an incident wave.

12. The liquid crystal display device according to claim 9, wherein the phase retardation plate comprises a λ/2 plate and a λ/4 plate.

13. The liquid crystal display device according to claim 9, wherein the phase retardation plate comprises one wide retardation film having using a reciprocal dispersion film.

14. The liquid crystal display device according to claim 1, further comprising a protrusion portion formed on a lower surface of the front light unit (180).

15. The liquid crystal display device according to claim 14, wherein the fine protrusion portion of the front light unit (180) is formed in a moth-eye structure.

16. The liquid crystal display device according to claim 1, wherein the polarizer comprises a polarization film and a transparent support.

17. The liquid crystal display device according to claim 1, wherein the polarizer has haze characteristics.

18. The liquid crystal display device according to claim 17, wherein the polarizer has a haze value of less than 30%.

19. The liquid crystal display device according to claim 1, wherein the transreflective liquid crystal panel (100) can operate in an electrically-controlled birefringence mode.

20. The liquid crystal display device according to claim 1, wherein the transreflective liquid crystal panel (100) is configured in a dual cell gap electrically-controlled birefringence mode such that it has a twist angle of 0° and a birefringence value comprises between 0.20 µm and 0.40 µm.

21. The liquid crystal display device according to claim 1, wherein further comprising light holes formed in a color filter of the transreflective liquid crystal panel (100).

22. The liquid crystal display device according to claim 1, wherein the transreflective liquid crystal panel (100) can operate in a vertical alignment mode.

23. The liquid crystal display device according to claim 1, wherein the transreflective liquid crystal panel (100) is configured in a vertical alignment mode such that it has a twist angle of 0° and a birefringence value comprises between 0.20 µm and 0.40 µm.

## Patentansprüche

1. Flüssigkristallanzeigevorrichtung, die Folgendes umfasst:
einen transreflektierenden Flüssigkristallbildschirm (100);
eine Vorderlichteinheit (180), die dem transreflektierenden Flüssigkristallbildschirm Licht liefert; und
einen Polarisator (170), der auf dem transreflektierenden Flüssigkristallbildschirm angeordnet ist, **dadurch gekennzeichnet, dass** der Polarisator (170) eine erste Fläche aufweist, die der Vorderlichteinheit (180) zugewandt ist, wo Ausbuchtungen in einer Mottenaugenstruktur gebildet sind, wobei die Mottenaugenstruktur einen Ausbuchtungsabstand aufweist, der kleiner als die Wellenlänge von Licht ist.

2. Flüssigkristallanzeigevorrichtung nach Anspruch 1, wobei die Flüssigkristallanzeigevorrichtung Folgendes bereitstellt: einen ersten Anzeigemodus, in dem Licht, das an einer reflektierenden Region des transreflektierenden Flüssigkristallbildschirms reflektiert wird, verwendet wird, um ein Bild auf einer ersten Seite des transreflektierenden Flüssigkristallbildschirms (100) anzuzeigen; und einen zweiten Anzeigemodus, in dem Licht, das durch eine durchlässige Region des transreflektierenden Flüssigkristallbildschirms (100) durchgelassen wird, verwendet wird, um ein Bild auf einer zweiten Seite des transreflektierenden Flüssigkristallbildschirms (100) anzuzeigen.

3. Flüssigkristallanzeigevorrichtung nach Anspruch 1, wobei die Vorderlichteinheit (180) eine Lichtquelle (181) auf ihrer Seite aufweist.

4. Flüssigkristallanzeigevorrichtung nach Anspruch 3, wobei die Lichtquelle (181) eines von einer LED und einer CCFL ist.

5. Flüssigkristallanzeigevorrichtung nach Anspruch 1, wobei der transreflektierende Flüssigkristallbildschirm (100) Folgendes umfasst:
ein erstes Substrat (110), das eine Array-Vorrichtung umfasst, die einen Dünnschichttransistor, eine durchlässige Elektrode (113), die einfallendes Licht durchlässt, um ein Bild anzuzeigen, und eine reflektierende Elektrode (115) aufweist, die einfallendes Licht reflektiert, um ein Bild anzuzeigen;
ein zweites Substrat (120), das an einer Position angeordnet ist, die dem ersten Substrat (110) entspricht und einen Farbfilter aufweist, der an einer Position gebildet ist, die der durchlässigen Elektrode (113) des ersten Substrats (110) entspricht; und
eine Flüssigkristallschicht, die zwischen dem ersten Substrat (110) und dem zweiten Substrat (120) gefüllt ist.

6. Flüssigkristallanzeigevorrichtung nach Anspruch 5, wobei das zweite Substrat (120) eine gemeinsame Elektrode umfasst, die auf einer ersten Fläche des Farbfilters gebildet ist.

7. Flüssigkristallanzeigevorrichtung nach Anspruch 1, wobei der transreflektierende Flüssigkristallbildschirm (100) Folgendes umfasst:
ein erstes Substrat (110), das eine Array-Vorrichtung, die eine Schaltfunktion durchführt, eine konvexkonkave Schicht (111), die aus einem organischen oder anorganischen Material gebildet ist, eine durchlässige Elektrode (113), die auf der konvex-konkaven Schicht gebildet ist und einen gebogenen Abschnitt aufweist, und eine reflektierende Elektrode (115) umfasst, die auf der konvex-konkaven Schicht (111) gebildet ist und einen gebogenen Abschnitt aufweist;
ein zweites Substrat (120), das an einer Position angeordnet ist, die dem ersten Substrat (110) entspricht und einen Farbfilter aufweist, der an einer Position gebildet ist, die der durchlässigen Elektrode (113) des ersten Substrats (110) entspricht; und
eine Flüssigkristallschicht, die zwischen dem ersten Substrat (110) und dem zweiten Substrat (120) gefüllt ist.

8. Flüssigkristallanzeigevorrichtung nach Anspruch 7, wobei das zweite Substrat (120) eine gemeinsame Elektrode umfasst, die auf der ersten Fläche des Farbfilters gebildet ist.

9. Flüssigkristallanzeigevorrichtung nach Anspruch 1, die ferner mindestens eine Phasenverzögerungsplatte umfasst, **die auf beiden Seiten des** transreflektierenden Flüssigkristallbildschirms (100) gebildet ist.

10. Flüssigkristallanzeigevorrichtung nach Anspruch 9, wobei die Phasenverzögerungsplatte linear polarisiertes Licht, das den Polarisator (170) durchquert hat, in zirkular polarisiertes Licht ändert.

11. Flüssigkristallanzeigevorrichtung nach Anspruch 9, wobei die Phasenverzögerungsplatte eine Phasenverzögerung von λ/4 4 in Bezug zu einer einfallenden Welle erzeugt.

12. Flüssigkristallanzeigevorrichtung nach Anspruch 9, wobei die Phasenverzögerungsplatte eine λ/2- und eine λ/4-Platte umfasst.

13. Flüssigkristallanzeigevorrichtung nach Anspruch 9, wobei die Phasenverzögerungsplatte eine breite Verzögerungsschicht umfasst, die eine reziproke Dispersionsschicht aufweist und verwendet.

14. Flüssigkristallanzeigevorrichtung nach Anspruch 1, die ferner einen Ausbuchtungsabschnitt umfasst, der auf einer unteren Fläche der Vorderlichteinheit (180) gebildet ist.

15. Flüssigkristallanzeigevorrichtung nach Anspruch 14, wobei der feine Ausbuchtungsabschnitt der Vorderlichteinheit (180) in einer Mottenaugenstruktur gebildet ist.

16. Flüssigkristallanzeigevorrichtung nach Anspruch 1, wobei der Polarisator eine Polarisationsschicht und einen transparenten Träger umfasst.

17. Flüssigkristallanzeigevorrichtung nach Anspruch 1, wobei der Polarisator Trübungseingenschaften aufweist.

18. Flüssigkristallanzeigevorrichtung nach Anspruch 17, wobei der Polarisator einen Trübungswert von weniger als 30% aufweist.

19. Flüssigkristallanzeigevorrichtung nach Anspruch 1, wobei der transreflektierende Flüssigkristallbildschirm (100) in einem elektrisch gesteuerten Doppelbrechungsmodus arbeiten kann.

20. Flüssigkristallanzeigevorrichtung nach Anspruch 1, wobei der transreflektierende Flüssigkristallbildschirm (100) in einem elektrisch gesteuerten Doppelbrechungsmodus mit doppeltem Zellenabstand konfiguriert ist, derart, dass er einen Drehungswinkel von 0° und einen Doppelbrechungswert aufweist, der zwischen 0.20 µm und 0.40 µm enthalten ist.

21. Flüssigkristallanzeigevorrichtung nach Anspruch 1, die ferner Lichtlöcher umfasst, die in einem Farbfilter des transreflektierenden Flüssigkristallbildschirms (100) gebildet sind.

22. Flüssigkristallanzeigevorrichtung nach Anspruch 1, wobei der transreflektierende Flüssigkristallbildschirm (100) in einem Vertikalanordnungsmodus arbeiten kann.

23. Flüssigkristallanzeigevorrichtung nach Anspruch 1, wobei der transreflektierende Flüssigkristallbildschirm (100) derart in einem Vertikalanordnungsmodus konfiguriert ist, dass er einen Drehungswinkel von 0° und einen Doppelbrechungswert aufweist, der zwischen 0.20 µm und 0.40 µm enthalten ist.

## Revendications

1. Dispositif d'affichage à cristaux liquides comprenant
un panneau à cristaux liquides transréflectif (100);
une unité de lumière frontale (180) fournissant une lumière au panneau à cristaux liquides transréflectif ; et
un polariseur (170) disposé sur le panneau à cristaux liquides transréflectif, **caractérisé en ce que** le polariseur (170) a une première surface, faisant face à l'unité de lumière frontale (180), où des protubérances sont formées selon une structure "Moth Eye" (oeil de mite), la structure Moth Eye ayant un pas de protubérances inférieur à la longueur d'onde de la lumière.

2. Dispositif d'affichage à cristaux liquides selon la revendication 1, le dispositif d'affichage à cristaux liquides fournissant : un premier mode d'affichage dans lequel la lumière réfléchie au niveau d'une région réflective du panneau à cristaux liquides transréflectif est utilisée pour afficher une image au niveau d'un premier côté du panneau à cristaux liquides transréflectif (100) ; et un second mode d'affichage dans lequel la lumière transmise à travers une région transmissive du panneau à cristaux liquides transréflectif (100) est utilisée pour afficher une image au niveau d'un second côté du panneau à cristaux liquides transréflectif (100).

3. Dispositif d'affichage à cristaux liquides selon la revendication 1, dans lequel l'unité de lumière frontale (180) comporte sur son côté une source de lumière (181).

4. Dispositif d'affichage à cristaux liquides selon la revendication 3, dans lequel la source de lumière (181) est l'une d'une DEL et d'une lampe fluorescente à cathode froide (CCFL).

5. Dispositif d'affichage à cristaux liquides selon la revendication 1, dans lequel le panneau à cristaux liquides transréflectif (100) comprend :
un premier substrat (110) comportant un dispositif matriciel présentant un transistor à couches minces, une électrode transmissive (113) transmettant la lumière incidente pour afficher une image, et une électrode réflective (115) réfléchissant la lumière incidente pour afficher une image ;
un second substrat (120) disposé à une position correspondant au premier substrat (110) et présentant un filtre chromatique formé à une position correspondant à l'électrode transmissive (113) du premier substrat (110) ; et
une couche de cristaux liquides remplie entre le premier substrat (110) et le second substrat (120).

6. Dispositif d'affichage à cristaux liquides selon la revendication 5, dans lequel le second substrat (120) comporte une électrode commune formée sur une première surface du filtre chromatique.

7. Dispositif d'affichage à cristaux liquides selon la revendication 1, dans lequel le panneau à cristaux liquides transréflectif (100) comprises:
un premier substrat (110) comportant un dispositif matriciel exécutant une fonction de commutation, une couche convexe-concave (111) formée en un matériau organique ou inorganique, une électrode transmissive (113) formée sur la couche convexe-concave et ayant une partie courbe, et une électrode réflective (115) formée sur la couche convexe-concave (111) et ayant une partie courbe ;
un second substrat (120) disposé à une position correspondant au premier substrat (110) et ayant un filtre chromatique formé à une position correspondant à l'électrode transmissive (113) du premier substrat (110) ; et
une couche de cristaux liquides remplie entre le premier substrat (110) et le second substrat (120).

8. Dispositif d'affichage à cristaux liquides selon la revendication 7, dans lequel le second substrat (120) comporte une électrode commune formée sur la première surface du filtre chromatique.

9. Dispositif d'affichage à cristaux liquides selon la revendication 1, comprenant en outre au moins une plaque de retard de phase formée sur les deux côtés du panneau à cristaux liquides transréflectif (100).

10. Dispositif d'affichage à cristaux liquides selon la revendication 9, dans lequel la plaque de retard de phase change une lumière polarisée linéairement qui a traversé le polariseur (170) en une lumière à polarisation circulaire.

11. Dispositif d'affichage à cristaux liquides selon la revendication 9, dans lequel la plaque de retard de phase génère un retard de phase de λ/4 par rapport à une onde incidente.

12. Dispositif d'affichage à cristaux liquides selon la revendication 9, dans lequel la plaque de retard de phase comprend une plaque λ/2 et une plaque λ/4.

13. Dispositif d'affichage à cristaux liquides selon la revendication 9, dans lequel la plaque de retard de phase comprend un large film de retard utilisant un film de dispersion réciproque.

14. Dispositif d'affichage à cristaux liquides selon la revendication 1, comprenant en outre une partie de protubérances formée sur une surface inférieure de l'unité de lumière frontale (180).

15. Dispositif d'affichage à cristaux liquides selon la revendication 14, dans lequel la partie de protubérances fines de l'unité de lumière frontale(180) est formée selon une structure Moth Eye.

16. Dispositif d'affichage à cristaux liquides selon la revendication 1, dans lequel le polariseur comprend un film de polarisation et un support transparent.

17. Dispositif d'affichage à cristaux liquides selon la revendication 1, dans lequel le polariseur comporte des caractéristiques de voile.

18. Dispositif d'affichage à cristaux liquides selon la revendication 17, dans lequel le polariseur a une valeur de voile de moins de 30%.

19. Dispositif d'affichage à cristaux liquides selon la revendication 1, dans lequel le panneau à cristaux liquides transréflectif (100) peut fonctionner dans un mode de biréfringence commandée électriquement.

20. Dispositif d'affichage à cristaux liquides selon la revendication 1, dans lequel le panneau à cristaux liquides transréflectif (100) est configuré dans un mode de biréfringence commandée électriquement à double espace cellulaire de telle sorte qu'il ait un angle de torsion de 0° et une valeur de biréfringence comprise entre 0,20 µm et 0,40 µm

21. Dispositif d'affichage à cristaux liquides selon la revendication 1, comprenant en outre des trous légers dans un filtre chromatique du panneau à cristaux liquides transréflectif (100).

22. Dispositif d'affichage à cristaux liquides selon la revendication 1, dans lequel le panneau à cristaux liquides transréflectif (100) peut fonctionner dans un mode d'alignement vertical.

23. Dispositif d'affichage à cristaux liquides selon la revendication 1, dans lequel le panneau à cristaux liquides transréflectif (100) est configuré dans un mode d'alignement vertical de telle sorte qu'il ait un angle de torsion de 0° et une valeur de biréfringence comprise entre 0,20 µm et 0,40 µm
